# EUROPÄISCHE PATENTSCHRIFT

(11) **EP 0 764 247 B1**
(45) Veröffentlichungstag und Bekanntmachung des Hinweises auf die Patenterteilung: **09.09.1998**
(21) Anmeldenummer: 95923309.9
(22) Anmeldetag: 12.06.1995
(51) Int. Cl.: F16H 61/12

(54) **SCHALTVENTIL**
SHIFT VALVE
SOUPAPE DE COMMANDE

(30) Priorität: 16.06.1994 DE 4421115
(43) Veröffentlichungstag der Anmeldung: 26.03.1997
(73) Patentinhaber: ZF FRIEDRICHSHAFEN Aktiengesellschaft, 88038 Friedrichshafen (DE)
(72) Erfinder: BOHNER, Ulrich, D-88690 Uhldingen-Mühlhofen (DE); FIDELER, Winfried, D-88046 Friedrichshafen (DE)
(86) Internationale Anmeldenummer: EP9502265
(87) Internationale Veröffentlichungsnummer: WO9534774

(56) Entgegenhaltungen:
- EP-A- 0 309 070
- DE-A- 1 960 742
- US-A- 3 199 647

## Beschreibung

Die Erfindung betrifft ein Schaltventil nach der im Oberbegriff von Anspruch 1 näher definierten Art.

Eine Getriebesteuerung eines Lastschaltgetriebes dieser Art weist im allgemeinen zwei Vorwärtskupplungen und zwei Rückwärtskupplungen auf. Die Ansteuerung der jeweiligen Kupplung erfolgt über einen Wendeschieber bzw. einen Ventilschieber mit einer Vorwärts-, einer Rückwärts- und mit einer Neutralstellung. Bekannt ist die Betätigung des Ventilschiebers durch mechanische Einrichtungen. Hierfür sind z. B. Drehfinger vorgesehen, durch die der Ventilschieber linear bewegt wird. Der Drehfinger kann vom Fahrer aus über einen Bowdenzug betätigt werden.

Ein Fahrtrichtungsschaltventil, welches durch manuelle Betätigung mit Hilfe eines Ventilschiebers die richtige Fahrtrichtung regelt (Vorwärts-, Rückwärts- oder Neutralstellung) und das einen Modus für Notfälle aufweist, ist bekannt aus EP-A 0 309 070. Im Falle des Auftretens eines Fehlers in der Stromversorgung wird das System automatisch in den ersten Betriebsmodus zurückgesetzt.

Ein Nachteil der bekannten mechanischen Lösungen ist jedoch, daß sie relativ aufwendig in der Betätigung sind und daß im allgemeinen keine weitere Einflußmöglichkeit bzw. Eingriffsmöglichkeit auf die Verschiebung des Ventilschiebers gegeben ist.

Der vorliegenden Erfindung liegt daher die Aufgabe zugrunde, ein Schaltventil der eingangs erwähnten Art zu schaffen, das einfacher zu betätigen ist und bei dem zusätzlich zur normalen Betätigungsart der Hauptfunktion im Bedarfsfalle weitere Betätigungsarten möglich sind.

Erfindungsgemäß wird diese Aufgabe durch die im kennzeichnenden Teil von Anspruch 1 genannten Merkmale gelöst.

Erfindungsgemäß erfolgt nunmehr eine Verschiebung des Ventilschiebers auf elektro-hydraulische Weise. Der bekannte Bowdenzug zur Betätigung des Ventilschiebers entfällt. Statt dessen wird die Einleitung bzw. Betätigung auf elektrische Weise, z. B. über Magnetventile, vorgenommen. Die Magnetventile wirken z. B. bei Betätigung auf Druckleitungen im Sinne einer Druckerhöhung, womit die gewünschte Umschaltung bzw. lineare Verschiebung des Ventilschiebers erreicht wird. Diese Betätigungsart kann als Grundfunktion bezeichnet werden. Hierfür sind sehr wenig Teile erforderlich. Insbesondere ist keine mechanische Verbindung mehr zum Fahrer erforderlich, denn die Magnetventile können auf einfache Weise durch eine elektrische Steuerverbindung aktiviert werden.

Zusätzlich zu der vorstehend genannten Grundfunktion kann z. B. für den Notbetrieb noch ein zweites Betätigungssystem erfindungsgemäß aktiviert werden. Bei Ausfall oder einer Störung der elektro-hydraulischen Betätigung tritt dieses erfindungsgemäß nunmehr derart in Kraft, daß über die Zentrierkolben bei Ausfall der normalen Steuerung diese den jeweiligen Ventilschieber entsprechend betätigen. Dies bedeutet, es ist möglich, die Ventilschieber für einen Notbetrieb in eine gewünschte Stellung zu bringen. Auf diese Weise kann verhindert werden, daß das Fahrzeug, z. B. der Schlepper, in welchem das erfindungsgemäße Getriebe eingebaut ist, bei Ausfall der normalen Steuerung nicht mehr bewegt werden kann. Wird z. B. durch eine Notbetätigung des Ventilschiebers durch die Zentrierkolben eine Verschiebung in Vorwärtsstellung vorgenommen, so kann das Fahrzeug entsprechend bewegt werden. Mit dieser Notbetätigung ist es möglich, die Arbeit des Schleppers fortzusetzen oder den Schlepper mit eigener Kraft zurück zum Hof oder in die Werkstatt zu fahren. Ebenso ist es auch möglich, durch Abstellen des Motors den Ventilschieber in eine Neutralstellung zu bringen. Dadurch ist es bei Ausfall der elektrohydraulischen Betätigung möglich, die rastierte Stellung des Ventils aufzuheben. Bei einem Neustart des Motors ist das Getriebe mit Sicherheit in Neutral.

Vorteilhafte Weiterbildungen und Ausgestaltungen der Erfindung sind aus den Unteransprüchen und aus den nachfolgend anhand der Zeichnung prinzipmäßig beschriebenen Ausführungsbeispielen ersichtlich.
Es zeigt:
- Fig. 1: ein Schaltschema für ein Ausführungsbeispiel;
- Fig. 2: die konstruktive Ausgestaltung des erfindungsgemäßen Schaltventiles im Schnitt nach der Linie II-II in der Fig. 3 für ein erstes Ausführungsbeispiel;
- Fig. 3: einen Schnitt durch das Schaltventil nach der Linie III-III in der Fig. 2;
- Fig. 4: die konstruktive Ausgestaltung des erfindungsgemäßen Schaltventiles im Schnitt nach der Linie IV-IV in der Fig. 5 eines zweiten Ausführungsbeispieles und
- Fig. 5: einen Schnitt durch das Schaltventil nach der Linie V-V in der Fig. 4 des zweiten Ausführungsbeispieles.

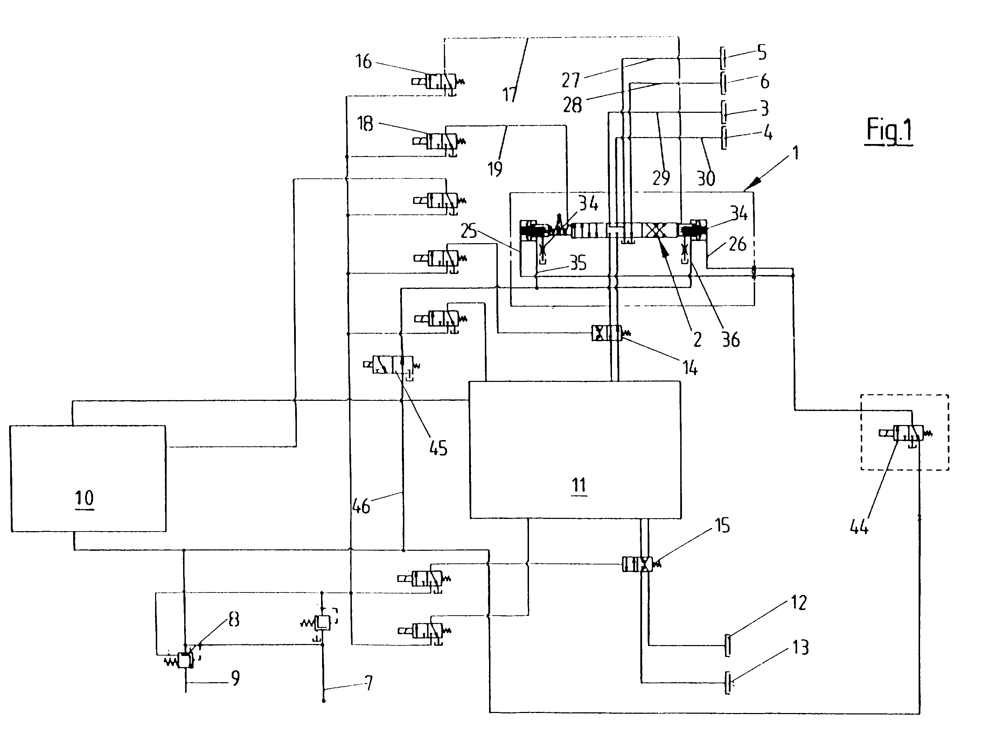

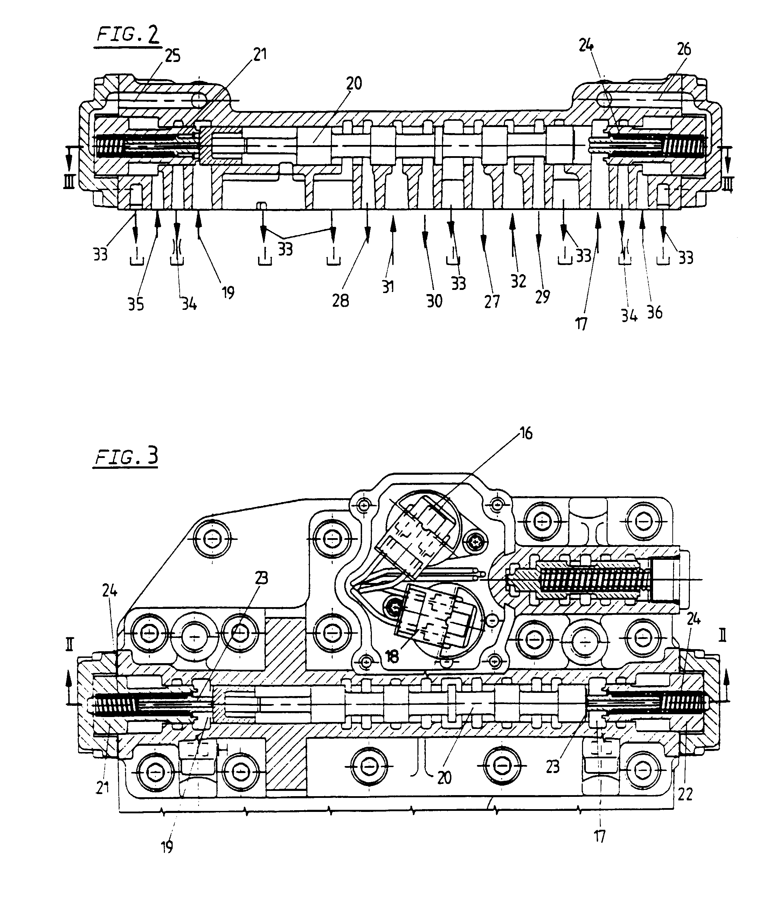

In der Fig. 1 ist nur ein vereinfachtes Schaltschema dargestellt, da dieses grundsätzlich von bekanntem Aufbau ist. Lediglich die für die Erfindung wesentlichen Teile sind darin näher beschrieben. Bei den in den Fig. 2/3 und 4/5 dargestellten konstruktiven Ausführungsbeispielen werden für die gleichen Teile die gleichen Bezugszeichen verwendet.

In einem Ventilgehäuse 1 ist ein Schaltventil 2 angeordnet, das drei Schaltstellungen aufweist, die durch einen Ventilschieber, der auch als Wendeschieber bezeichnet wird, eingestellt werden, nämlich eine Schaltstellung für Vorwärtsfahrt, eine Neutralstellung und eine Schaltstellung für Rückwärtsfahrt.

Geschaltet werden durch das Schaltventil 2 zwei Vorwärtskupplungen 3, 4 und zwei Rückwärtskupplungen 5, 6. Von einer Druckzuleitung 7 aus wird Druckmittel einem Systemdruckventil 8 zugeführt. Das Systemdruckventil 8 begrenzt in bekannter Weise den Druck für das Lastschaltgetriebe auf z. B. 18 bar. Die Überschußmenge des Druckmittels wird einer Schmierleitung 9 zur Schmierung des Getriebes zugeführt. Vom Systemdruckventil 8 führt eine Druckleitung zu einem Drucksteuerventil 10. Das Drucksteuerventil 10 hat die an sich bekannte Aufgabe, einen modulierten Druckanstieg für die Betätigungen der Kupplungen zu erzeugen. Von dem Drucksteuerventil 10 aus führt eine Druckleitung zu nicht näher dargestellten Halteventilen 11, durch die abzuschaltende Kupplungen noch kurzfristig gehalten werden können. Ein Schaltventil 14 dient zum Anwählen der Kupplungen 3 bis 6. Ein Schaltventil 15 ist für die Kupplungen 12 und 13 vorgesehen.

Ein Magnetventil 16 für Rückwärtsfahrt ist mit einer zu dem Schaltventil führenden Druckleitung 17 und ein Magnetventil 18 für Vorwärtsfahrt ist mit einer ebenfalls zu dem Schaltventil 2 führenden Druckleitung 19 verbunden.

Der konstruktive Aufbau des Schaltventiles 2 nach einem ersten Ausführungsbeispiel ist aus den Fig. 2 und 3 deutlicher ersichtlich.

In dem Ventilgehäuse sind auch die Magnetventile 16 und 18 integriert. Die Druckleitungen 17 und 19 münden jeweils hinter der Stirnseite eines Ventilschiebers 20. Der Ventilschieber 20 mit seinen mit dem Ventilgehäuse 1 zusammenwirkenden Steuerkanten ist von bekanntem Aufbau, wobei diese, je nach ihren Stellungen gegenüber dem Ventilgehäuse, die Kupplungen 3 bis 6 entsprechend mit Druckmittel versorgen. Auf den von dem Ventilschieber 20 abgewandten Seiten der Druckzuleitungen 17 und 19 sind Zentrierkolben 21 und 22 in dem Ventilgehäuse 1 angebracht. Jeder Zentrierkolben besitzt einen inneren Stößel 23, der jeweils mit einer Feder 24 vorgespannt ist. Die beiden Stößel 23 wirken jeweils auf eine Stirnseite des Ventilschiebers 20, und zwar in der Weise, daß bei einer Unwirksamkeit der beiden Magnetventile 16 und 18, d. h. bei fehlendem Druck in den Druckleitungen 17 und 19, der Ventilschieber 20 in der mittleren Neutralstellung zentriert wird. Bei Betätigung eines Magnetventiles 16 oder 18 wird der Ventilschieber 20 gegen den federbelasteten Stößel 23 der jeweils anderen Seite verschoben.

Diese Betätigung stellt praktisch die Grundfunktion dar, nämlich durch eine entsprechende Betätigung des gewünschten Magnetventiles 16 oder 18 und damit eine entsprechende Druckbeaufschlagung in der Druckleitung 17 oder 19 eine Verschiebung des Ventilschiebers 1 und damit eine entsprechende Schaltung bzw. Betätigung einer der Kupplungen 3 bis 6. Nach Abschalten des Magnetventiles kehrt der Ventilschieber 20 wieder in seine zentrierte Neutralstellung zurück.

Aufgrund der Zentrierkolben 21 und 22 ist jedoch noch eine Zusatzfunktion möglich. In einer Notfunktion kann im Bedarfsfalle eine Fahrtrichtung geschaltet werden, und zwar derart, daß der betreffende Zentrierkolben 21 bzw. 22 auf seiner Außenseite mit Druck beaufschlagt wird. Hierzu dienen entsprechende Druckleitungen 25 und 26, die hinter den Stirnseiten der Zentrierkolben 21 und 22 enden. Wird Druck in eine der beiden Leitungen 25 oder 26 gegeben, so verschiebt sich der entsprechende Zentrierkolben 21 oder 22 in Richtung auf den Ventilschieber 20 und verstellt diesen entsprechend in die gewünschte Schaltstellung. Hierzu ist es selbstverständlich erforderlich, daß der entsprechend aktivierte Zentrierkolben 21 oder 22 um den doppelten Weg des normalen Hubes des Ventilschiebers verschoben werden muß, um den Ventilschieber 20 z. B. von Neutralstellung in eine Schaltstellung zu bringen. Anders ausgedrückt: im Notbetrieb muß der Zentrierkolben 21 oder 22 den gleichen Weg zurücklegen, wie der Ventilschieber 20 von vorwärts nach rückwärts.

In der Fig. 2 ist der Ventilschieber 20 in Vorwärtsstellung und in Fig. 3 in Neutralstellung dargestellt.

Die Betätigung der Zentrierkolben über die Druckleitungen 25 oder 26 sollte in der Regel unabhängig von der Normalfunktion erfolgen. Dies kann z. B. über ein mechanisch betätigtes Druckventil erreicht werden.

Wie erwähnt, ist in der Fig. 2 die Vorwärtsschaltstellung dargestellt, was bedeutet, daß die Druckleitung 17 druckbeaufschlagt ist. Die seitlichen Abgänge aus dem Ventilgehäuse 1 im Bereich des Ventilschiebers 20 sind jeweils die Abgänge bzw. Druckleitungen zu den Kupplungen 3 bis 6. Über Kupplungsdruckleitungen 27, 28, 29 und 30 sind die Kupplungen 3, 4, 5 und 6 entsprechend mit diesen Abgängen verbunden. In Fig. 2 ist dies jeweils durch Pfeile eingetragen.

Eine Druckmittelzuleitung 31 mündet für die Kupplungen 4 und 6 in das Schaltventil 2. In der in der Fig. 2 dargestellten Position ist dabei die Druckmittelzuleitung 31 mit der Kupplungsdruckleitung 30 verbunden. Eine weitere Druckmittelzuleitung 32 ist für die Kupplungen 3 und 5 vorgesehen. Weiterhin sind Entlüftungsleitungen 33 aus dem Schaltventil 2 vorgesehen.

Zusätzlich sind hinter beiden Stirnseiten des Ventilschiebers 20 Entlüftungsleitungen 34 vorgesehen, die mit einer Drosselstelle versehen sind. Diese Entlüftungsleitungen haben folgende Aufgabe:

Beim Abschalten des Antriebsmotors des Fahrzeuges und damit bei Abfall des Systemdruckes sollen die Zentrierkolben 25 und 26 möglichst schnell in die Neutralstellung für den Ventilschieber 20 gebracht werden. Aus diesem Grunde ist ein schneller Druckabbau erforderlich. Hierzu sind die Steuerkanten der Zentrierkolben 25, 26 nun so ausgeführt, daß einerseits in Betriebstellung eine Abdichtung des Systemdruckes sichergestellt ist, andererseits jedoch bei Verschiebung des Ventilschiebers 20 in Neutralstellung bereits nach einem kurzen Hub eine Verbindung zur Entlüftungsleitung 34 erreicht wird, wodurch der Systemdruck auf diese Weise rasch abgebaut werden kann. Damit jedoch beim Inbetriebsetzen bzw. beim Aufbau des Systemdruckes dieser nicht sofort wieder über die Entlüftungsleitung 34 entweichen kann, ist in dieser eine Drosselstelle vorgesehen.

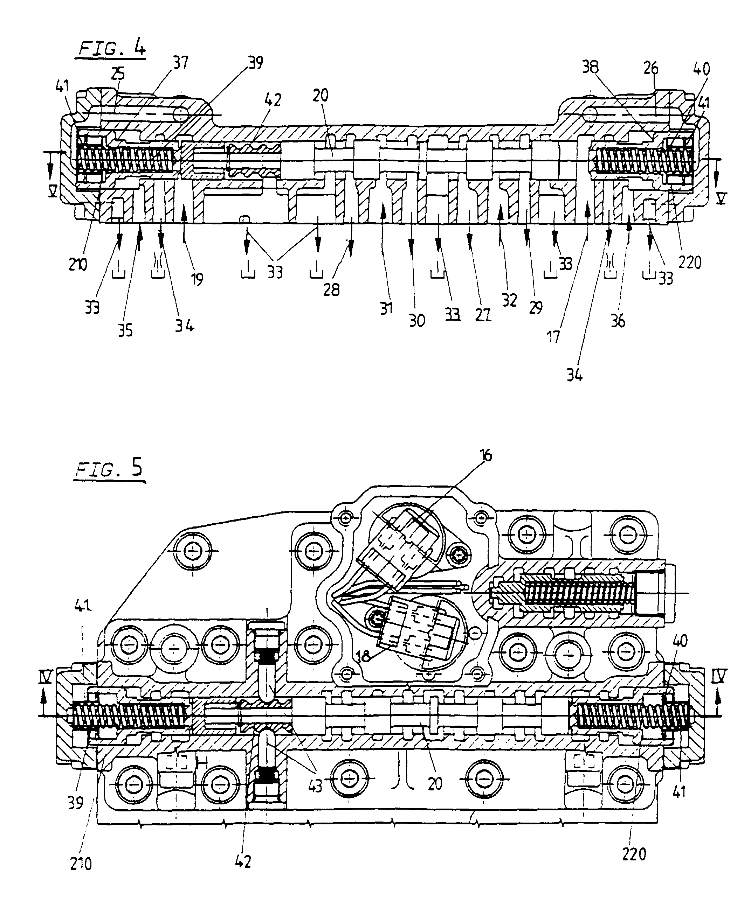

Das Ausführungsbeispiel nach den Fig. 4 und 5 ist grundsätzlich von gleichem Aufbau, weshalb auch die gleichen Bezugszeichen verwendet worden sind. Der wesentliche Unterschied liegt lediglich in der Ausführungsform für die Zentrierkolben 210 und 220. Die Grundfunktion für einen Notbetrieb ist dabei die gleiche, ebenso die Belegung der Steuerkanten und Steuerkanäle in dem Schaltventil 2.

Bei diesem Ausführungsbeispiel entfallen jedoch die Stößel für die Zentrierkolben. Sobald der Antriebsmotor eingeschaltet wird, gelangt Systemdruck in Höhe von z. B. 18 bar in die beiden Anschlüsse 35 und 36 und damit auf Druckflächen 37 und 38 der Zentrierkolben 210 und 220, wodurch diese damit gegen die Kraft der Federn 39 und 40 auseinandergespreizt werden. Die Federn 39 und 40 sind jeweils durch eine Blechkappe 41 gefangen, die in dem jeweiligen Zentrierkolben 210 bzw. 220 auf beliebige Weise, z. B. durch einen Sprengring, positioniert ist. Sind die beiden Zentrierkolben 210 und 220 im Normalbetrieb aufgrund des Systemdrucks zurückgeschoben, ist der Ventilschieber 20 frei verschiebbar. Die gewünschte Verschiebung erfolgt in gleicher Weise wie bei dem anderen Ausführungsbeispiel durch das entsprechend aktivierte Magnetventil 16 oder 18.

Im Unterschied zu dem ersten Ausführungsbeispiel ist in diesem Falle jedoch eine Rastierung durch ein Rastglied 42 erforderlich, das mit dem Ventilschieber 20 verbunden ist. Das Rastglied 42 ist mit 3 Rasten für Vorwärtsfahrt, Neutralstellung und für Rückwärtsfahrt versehen, in die federbelastete Stifte 43 einrasten. Durch das Rastglied wird der Ventilschieber 20 in der jeweils geschalteten Position gehalten. Die Rastierung kommt jedoch nur dann zum Tragen, wenn die Magnetventile 16, 18 oder die gesamte Elektronik ausfällt, wenn als Folge davon keine hydraulischen Kräfte mehr auf den Ventilschieber 20 wirken. In der Fig. 5 ist die Rastierung in Neutralstellung dargestellt.

Diese Rastierung ist als Sicherheitsfunktion vorgesehen. Bei Ausfall eines Magnetventiles oder der Elektronik sollte die geschaltete Fahrtrichtung erhalten bleiben. Wenn die Fahrtrichtung jedoch in einem Notfalle trotzdem geändert werden soll, hat der Fahrer ebenfalls die gleiche Möglichkeit wie bei dem Ausführungsbeispiel nach den Fig. 2 und 3. In diesem Falle wird auf die Rückseite des gewünschten Zentrierkolbens über die Leitung 25 oder 26 Druck gegeben, womit der Ventilschieber 20 in die gewünschte Fahrtstellung verschoben werden kann.

Bei Wegfall des Systemdruckes, d. h. zum Beispiel beim Abschalten des Antriebsmotors, bringen die beiden Zentrierkolben 210 und 220 den Ventilschieber 20 wieder in Neutralstellung zurück.

Für das Ausführungsbeispiel nach den Fig. 4 und 5 ist noch eine zusätzliche vorteilhafte Ausgestaltung des Schaltventiles 2 vorgesehen. Wie aus dem Schaltschema gemäß Fig. 1 ersichtlich ist, ist ein externes Wegeventil 44 vorgesehen. Das Wegeventil 44 stellt eine zusätzliche Sicherheitsschaltung dar. Es ist mit Systemdruck beaufschlagt und bei dessen Betätigung wird ebenfalls außenseitig bzw. federseitig Druck über die Druckleitungen 25, 26 auf die beiden Zentrierkolben 210 und 220 gegeben, wodurch der Ventilschieber 20 in seine Neutralposition gebracht wird. Das Wegeventil 44 ist deshalb als "extern" bezeichnet, weil es an irgendeiner Stelle außerhalb des Schaltventiles 2 angebracht sein kann. Für dessen Funktion ist es lediglich erforderlich, daß der Antriebsmotor noch läuft und damit Systemdruck vorhanden ist. Auf diese Weise wird als zusätzliche Absicherung eine aktive Neutralschaltung des Ventilschiebers 20 erreicht. Dies bedeutet, es besteht damit die Möglichkeit, in jeder Lage eine Neutralstellung zu erreichen.

Wird das externe Wegeventil 44 als 4/3-Wegeventil ausgebildet oder werden hierfür zwei Magnetventile vorgesehen, so kann zusätzlich noch bei vorhandenem Systemdruck, d. h. bei laufendem Motor, neben der Wahl einer Neutralstellung auch noch eine bestimmte Fahrtrichtungstellung gewählt werden. In diesem Falle wird nämlich nur Druck auf eine Außenseite bzw. Federseite eines der beiden Zentrierkolbens gebracht, während der andere Zentrierkolben außenseitig entlüftet wird.

Zusätzlich zu dem Wegeventil 44 oder statt dessen kann ein Neutralventil 45 vorgesehen sein, das in der Druckzuleitung 46 zu dem Schaltventil 2 angeordnet ist. In der Druckzuleitung 46 herrscht Systemdruck. Wird das Neutralventil 45 betätigt, so wird der Systemdruck abgeschaltet und die Druckzuleitung 46 damit entlüftet. Dies bedeutet, daß durch diese Abschaltung des Systemdruckes das Schaltventil 2 in die neutrale Mittelstellung geschaltet werden kann. Das Neutralventil 45 kann manuell oder elektrisch betätigt werden.

### Bezugszeichen

- 1: Ventilgehäuse
- 2: Schaltventil
- 3: Vorwärtskupplung
- 4: Vorwärts kupplung
- 5: Rückwärtskupplung
- 6: Rückwärtskupplung
- 7: Druckleitung
- 8: Systemdruckventil
- 9: Schmierleitung
- 10: Drucksteuerventil
- 11: Halteventil
- 12: Gangschaltkupplung
- 13: Gangschaltkupplung
- 14: Schaltventil
- 15: Schaltventil
- 16: Magnetventil
- 17: Druckleitung
- 18: Magnetventil
- 19: Druckleitung
- 20: Ventilschieber
- 21: Zentrierkolben
- 210: Zentrierkolben
- 22: Zentrierkolben
- 220: Zentrierkolben
- 23: Stößel
- 24: Feder
- 25: Druckleitung
- 26: Druckleitung
- 27: Kupplungsdruckleitung
- 28: Kupplungsdruckleitung
- 29: Kupplungsdruckleitung
- 30: Kupplungsdruckleitung
- 31: Druckmittelzuleitung
- 32: Druckmittelzuleitung
- 33: Entlüftungsleitung
- 34: Entlüftungsleitung
- 35: Anschluß
- 36: Anschluß
- 37: Druckfläche
- 38: Druckfläche
- 39: Feder
- 40: Feder
- 41: Blechkappe
- 42: Rastglied
- 43: Stift
- 44: Weaeventil
- 45: Neutralventil
- 46: Druckzuleitung

## Patentansprüche

1. Schaltventil (2) für die Schaltung der Fahrtrichtung eines Lastschaltgetriebes, insbesondere für einen Schlepper, wobei ein in einem Ventilgehäuse (1) angeordneter Ventilschieber (20) in eine Vorwärts-, Rückwärts- oder Neutralstellung verstellbar ist, dadurch **gekennzeichnet,** daß der Ventilschieber (20) durch elektro-hydraulische Einrichtungen (16, 18) verstellbar ist und daß in dem Ventilgehäuse (1) Zentrierkolben (21, 22 bzw. 210, 220) vorgesehen sind, die in Normalbetrieb in einer zurückgezogenen bzw. nicht aktivierten Position liegen, während sie bei Notfunktion hydraulisch oder pneumatisch derart aktivierbar sind, daß sie unter Umgehung der normalen Ansteuerung für den Ventilschieber (20) diesen betätigen.

2. Schaltventil (2) nach Anspruch 1, dadurch **gekennzeichnet,** daß die elektro-hydraulischen Einrichtungen Magnetventile (16, 18) aufweisen, die mit Druckleitungen (17, 19) verbunden sind, die zur Betätigung des Ventilschiebers (20) vorgesehen sind.

3. Schaltventil (2) nach Anspruch 1 oder 2, dadurch **gekennzeichnet,** daß jeweils ein Zentrierkolben (210, 220) an einer Stirnseite des Ventilschiebers (20) angeordnet ist, wobei die Zentrierkolben (210, 220) durch vorgespannte Zentrierfedern (39, 40) den Ventilschieber (20) in eine Mittellage N drücken, wobei die Vorspannkraft der Zentrierfedern (39, 40), so groß gewählt ist, daß eine Rastierung des Ventilschiebers (20) überwindbar ist.

4. Schaltventil (2) nach Anspruch 1, 2 oder 3, dadurch **gekennzeichnet,** daß Steuerkanten der Zentrierkolben (21, 22 bzw. 210, 220) so ausgeführt sind, daß einerseits in Betriebstellung eine Abdichtung des Systemdruckes sichergestellt ist, andererseits bei Wegfall des Druckes in den Anschlüssen (35, 36) eine Verbindung dieser Anschlüsse (35, 36) zu einer Entlüftungsleitung (34) herstellbar ist.

5. Schaltventil (2) nach Anspruch 4, dadurch **gekennzeichnet,** daß in der Entlüftungsleitung (34) eine Drosselstelle vorgesehen ist.

6. Schaltventil (2) nach den Ansprüchen 1 bis 5, dadurch **gekennzeichnet,** daß zur Betätigung der Zentrierkolben (21, 22 bzw. 210, 220) eine vom Motor des Fahrzeuges angetriebene Pumpe vorgesehen ist.

7. Schaltventil (2) nach einem der Ansprüche 1 bis 6, dadurch **gekennzeichnet,** daß ein externes Wegeventil (44) vorgesehen ist, durch das die Außenseiten bzw. Federseiten von beiden Zentrierkolben (21, 22 bzw. 210, 220) mit Druck beaufschlagbar sind.

8. Schaltventil (2) nach einem der Ansprüche 1 bis 6, dadurch **gekennzeichnet,** daß ein externes Wegeventil (44) vorgesehen ist, durch das die Außenseite bzw. Federseite des einen Zentrierkolbens (21, 22 bzw. 210, 220) druckbeaufschlagt und die des anderen Zentrierkolbens (21, 22 bzw. 210, 220) entlüftbar ist.

9. Schaltventil (2) nach Anspruch 8, dadurch **gekennzeichnet,** daß das Wegeventil (44) als 4/3-Wegeventil ausgebildet ist.

10. Schaltventil (2) nach einem der Ansprüche 1 bis 9, dadurch **gekennzeichnet,** daß ein externes Neutralventil (45) in einer der zu dem Schaltventil (2) führenden Druckzuleitung (46) vorgesehen ist, durch das der Öldruck auf den Innenseiten der Zentrierkolben (21, 22 bzw. 210, 220) abschaltbar ist.

11. Schaltventil (2) nach einem der Ansprüche 5 bis 10, dadurch **gekennzeichnet,** daß das externe Neutralventil (45) und/oder das Wegeventil (44) manuell oder elektrisch betätigbar ist.

## Claims

1. Shift valve (2) for switching the direction of travel of a power shift transmission, in particular for a tractor, wherein a valve slide (20) disposed in a valve housing (1) is movable into a forward, reverse or neutral position, characterized in that the valve slide (20) is movable by means of electro-hydraulic devices (16, 18) and that centring pistons (21, 22 or 210, 220) are provided in the valve housing (1) and during normal operation lie in a retracted or non-activated position, whereas during emergency operation they may be hydraulically or pneumatically activated in such a way that they operate the valve slide (20), bypassing the normal actuation process of said valve slide.

2. Shift valve (2) according to claim 1, characterized in that the electro-hydraulic devices comprise solenoid valves (16, 18) which are connected to pressure lines (17, 19) provided for operating the valve slide (20).

3. Shift valve (2) according to claim 1 or 2, characterized in that a centring piston (210, 220) is disposed at each end face of the valve slide (20), the centring pistons (210, 220) by means of preloaded centring springs (39, 40) pressing the valve slide (20) into a central position N, the preloading force of the centring springs (39, 40) being selected high enough to overcome a latching of the valve slide (20) .

4. Shift valve (2) according to claim 1, 2 or 3, characterized in that control edges of the centring pistons (21, 22 or 210, 220) are so designed that on the one hand in operating position a sealing of the system pressure is ensured, on the other hand upon a falling away of the pressure in the connections (35, 36) a connection of said connections (35, 36) to a venting line (34) may be established.

5. Shift valve (2) according to claim 4, characterized in that a throttle point is provided in the venting line (34).

6. Shift valve (2) according to claims 1 to 5, characterized in that a pump driven by the engine of the vehicle is provided for operating the centring pistons (21, 22 or 210, 220).

7. Shift valve (2) according to one of claims 1 to 6, characterized in that an external directional valve (44) is provided, by means of which the outsides or spring sides of both centring pistons (21, 22 or 210, 220) may be pressurized.

8. Shift valve (2) according to one of claims 1 to 6, characterized in that an external directional valve (44) is provided, by means of which the outside or spring side of the one centring piston (21, 22 or 210, 220) may be pressurized and the outside or spring side of the other centring piston (21, 22 or 210, 220) may be vented.

9. Shift valve (2) according to claim 8, characterized in that the directional valve (44) takes the form of a 4/3-way valve.

10. Shift valve (2) according to one of claims 1 to 9, characterized in that provided in a pressure supply line (46) leading to the shift valve (2) is an external neutral valve (45), by means of which the oil pressure is disconnectable at the insides of the centring pistons (21, 22 or 210, 220).

11. Shift valve (2) according to one of claims 5 to 10, characterized in that the external neutral valve (45) and/or the directional valve (44) is manually or electrically operable.

## Revendications

1. Valve de commande (2) pour l'enclenchement du sens de marche d'une boîte de vitesses couplable sous charge, en particulier pour un tracteur, équipée d'une soupape à tiroir (20) disposée dans un boîtier de valve (1) déplaçable en position avant, amère ou neutre, **caractérisée** en ce que le tiroir de distributeur (20) est variable à travers des éléments électro-hydrauliques (16, 18) et que des pistons de centrage (21, 22 ou 210, 220) sont prévus dans le boîtier de valve (1) qui en fonctionnement normal se trouvent dans une position rétractée ou non active, tandis qu' en cas de fonctionnement d'urgence ils sont activables pneumatiquement ou hydrauliquement de telle manière qu'ils actionnent la soupape à tiroir (20) en évitant le pilotage normal.

2. Valve de commande (2) selon la revendication 1, **caractérisée** en ce que les éléments électro-hydrauliques comportent des électrovannes (16,18), qui sont liées aux tuyaux de pression (17, 19), prévus pour l'actionnement de la soupape à tiroir (20).

3. Valve de commande (2) selon la revendication 1 ou 2, **caractérisée** en ce que sur les faces frontales de la soupape (20) est appliqué respectivement un piston de centrage (210, 220), en tenant compte du fait que la soupape tiroir (20) est poussée dans une position centrale N par l'intermédiaire des pistons de centrage (210,220) équipés de ressorts de centrage précontraints, la force de précontrainte des ressorts de centrage (39, 40) étant si élevée, que le dispositif de verrouillage de la soupape à tiroir (20) est franchissable.

4. Valve de commande (2) selon revendication 1, 2 ou 3, **caractérisée** en ce que les arêtes de commande des pistons de centrage (21, 22 ou 210, 220) sont conçues de façon à ce que d'une part - en mode de service - le maintien de la pression du système est assurée, et que d'autre part en cas de chute de la pression dans les raccords (35, 36) il sera possible d'établir, à partir de ces raccords, une liaison à un tuyau d'évacuation (34).

5. Valve de commande (2) selon la revendication 4, **caractérisée** en ce qu'un point d'étranglement est prévu dans le tuyau d'évacuation (34).

6. Valve de commande (2) selon une des revendications 1 à 5, **caractérisée** en ce que pour l'actionnement des pistons de centrage (21, 22 ou 210, 220) une pompe entraînée par le moteur du véhicule est prévue.

7. Valve de commande (2) selon les revendications 1 à 6, **caractérisée** en ce qu' une valve à voies externe (44) est prévue, à travers laquelle les faces extérieures ou les côtés des deux pistons de centrage (21, 22 ou 210, 220) équipés de ressorts peuvent être mis sous pression.

8. Valve de commande (2) selon une des revendications 1 à 6 **caractérisée** en ce qu'elle comporte une valve à voies externe (44), à travers laquelle la face extérieure ou le côté d'un des pistons de centrage (21,22 ou 210, 220) équipé de ressorts est pressurisable et la face de l'autre piston de centrage (21, 22 ou 210, 220) est ventilable.

9. Valve de commande (2) selon la revendication 8, **caractérisée** en ce que la valve à voies externe (44) est une valve à 4/3 voies.

10. Valve de commande (2) selon une des revendications 1 à 9, **caractérisée** en ce qu' une valve neutre externe (45) est prévue dans un des tuyaux d'alimentation de pression (46) de la valve de commande (2), à travers laquelle la pression d'huile sur le côté intérieur des pistons de centrage (21, 22 ou 210, 220) est désenclenchlable.

11. Valve de commande (2) selon une des revendications 5 à 10, **caractérisée** en ce que la valve neutre externe (45) et/ou la valve à voies externe (44) est actionnable manuellement ou électriquement.
